# EUROPÄISCHE PATENTSCHRIFT

(11) **EP 0 584 092 B1**
(45) Veröffentlichungstag und Bekanntmachung des Hinweises auf die Patenterteilung: **26.06.1996**
(21) Anmeldenummer: 92908162.8
(22) Anmeldetag: 08.04.1992
(51) Int. Cl.: B03B 9/02, B03D 1/02, C22B 1/00

(54) **VERFAHREN UND VORRICHTUNG ZUR REINIGUNG KÖRNIGER MATERIALIEN VON FETTIGEN SUBSTANZEN, INSBESONDERE ÖL**
PROCESS AND DEVICE FOR CLEANING FATTY SUBSTANCES, ESPECIALLY OIL, FROM GRANULAR MATERIALS
PROCEDE ET DISPOSITIF POUR ENLEVER DE MATERIAUX GRANULEUX DES SUBSTANCES GRASSES, NOTAMMENT DE L'HUILE

(30) Priorität: 16.05.1991 DE 4115920
(43) Veröffentlichungstag der Anmeldung: 02.03.1994
(73) Patentinhaber: THYSSEN INDUSTRIE AG, D-45128 Essen (DE)
(72) Erfinder: RUBARTH, Wolfgang, D-4300 Essen 15 (DE); WÄCHTER, Helge, D-5100 Aachen (DE); WEBER, Günter, D-4330 Mülheim (DE)
(74) Vertreter: Dahlkamp, Heinrich-Leo, Dipl.-Ing.
(86) Internationale Anmeldenummer: EP9200797
(87) Internationale Veröffentlichungsnummer: WO9220452

(56) Entgegenhaltungen:
- EP-A- 0 080 589
- EP-A- 0 313 116
- DE-A- 3 040 099
- DE-A- 3 043 220
- DE-C- 3 146 809
- US-A- 4 667 885

## Beschreibung

Die Erfindung bezieht sich auf ein Verfahren zur Reinigung körniger Materialien gemäß Oberbegriff des Anspruches 1 und eine Vorrichtung zur Durchführung des Verfahrens nach Anspruch 3.

Ein gattungsgemäßes Verfahren ist aus der EP-B1 0 080 589 bekannt. Dabei werden die Materialien zur Oberflächenglättung in einem Mahlwerk behandelt und anschließend unter Zugabe von Flüssigkeit in einem Konditionierbehälter gerührt und dann in einer Flotation gewaschen. Dabei wird das gesamte Material nach der Attrition der Flotation zugeführt, so daß die Flotationsstufe entsprechend groß und aufwendig gestaltet sein muß.

Aus der EP-A-0 313 116 ist weiterhin ein gattungsgemäßes Verfahren zur Aufbereitung von kontaminierten Böden bekannt, bei dem die Hydrozyklonierung als reine Klassierstufe zur Entschlämmung des Austrages der Attritionsmühle benutzt wird.

Aufgabe der Erfindung ist es, ein Verfahren und eine Vorrichtung vorzuschlagen, bei dem nicht das gesamte Material der Flotationsstufe zugeführt werden muß und die Investitions- und Betriebskosten gesenkt werden können.

Zur Lösung dieser Aufgabe werden die Merkmale des Kennzeichens des Anspruches 1 vorgeschlagen. Die Ansprüche 2 bis 5 enthalten ergänzende Verfahrens- und Vorrichtungsvorschläge dazu.

Es hat sich erfindungsgemäß gezeigt, daß der Einsatz eines Zyklons nach der Attrition und vor Aufgabe auf die Flotationsmaschinen im Hinblick auf die Maschinentechnik und auch auf die Betriebskosten erhebliche Vorteile hat. Dabei ist es sinnvoll, bei Einsatz des Zyklons zwischen Attrition und Konditionierung das Material auf 50 - 150 g/l zu verdünnen. Bei Einsatz des Zyklons nach der Konditionierung kann wegen der Zugabe von Flüssigkeit bei der Konditionierung auf die Verdünnung verzichtet werden. Bei der Behandlung des Materials in dem ein- oder mehrstufigen Zyklonsystem wird eine Ablösung der Feststoffe und eine Trennung der ölhaltigen Phase von der Feststoffphase aufgrund des Dichteunterschiedes bewirkt, so daß bereits vor der Flotation zu einem frühen Zeitpunkt ausreichend gereinigtes Material abgezogen werden kann und somit die weitere Verfahrenslinie darauf angepaßt ausgelegt werden kann. Gleichzeitig reduziert sich der Reagenzienbedarf, der sich an der spezifischen Oberfläche orientiert. Die Zyklonstufe vor bzw. nach der Konditionierung kann in Abhängigkeit vom Kornaufbau des Aufgabematerials mehrstufig ausgeführt werden, um sicherzustellen, daß der Kohlenwasserstoffgehalt den Erfordernissen für den Wiedereinbau bzw. den Eingangswerten der jeweiligen Deponie genügt.

Zur Durchführung des Verfahrens hat sich in besonderer Weise der Einsatz von Flachbodenzyklonen als günstig erwiesen, bei denen sich im auslaufenden Konusbereich ein rotierendes Wirbelbett ausbildet. Nach der Behandlung im Flachbodenzyklon kann das nur schwer zu reinigende Feinstkorn von 15-20 µm zusätzlich durch einen Klassierzyklon vor der Flotation abgetrennt werden.

In der nachfolgenden Tabelle sind erste mit dem erfindungsgemäßen Verfahren erzielte Ergebnisse aufgeführt:

| | I | II |
|---|---|---|
| Aufgabematerial | Sandfangrückstände | |
| Ölgehalt im Aufgabematerial | 4,5 % | 4,5 % |

| Aufgabe Flachbodenzyklon | | |
|---|---|---|
| Feststoffgehalt Aufgabetrübe | 100 g/l | 80 g/l |

| Unterlauf Flachbodenzyklon | | |
|---|---|---|
| Mengenausbringen | 82 % | 90 % |
| Ölgehalt | 0,4 % | 0,3 % |

| Überlauf Flachbodenzyklon | | |
|---|---|---|
| Mengeausbringen | 18 % | 10 % |
| Ölgehalt | 4,7 % | 12,6 % |

Die Erfindung wird anhand des beigefügten Verfahrensschemas beispielsweise näher erläutert.

Die Anlage zur Durchführung des erfindungsgemäßen Verfahrens ist in ihrem grundsätzlichen Aufbau ausgezeichnet durch den Aufgabebehälter 1, die Attrition 2, den Stapelbehälter 3, den Konditionierer 4, die Flachbodenzyklone 6 oder 16, sowie die Flotation 5. Bei Verwendung des Flachbodenzyklons 16 werden zusätzlich die gestrichelt dargestellten Leitungswege beaufschlagt.

Das kontaminierte Material, das aus Walzenzunder oder ölhaltigen bzw. Kohlenwasserstoff enthaltenden Schlämmen besteht, wird über die Materialaufgabe 10, den Aufgabebehälter 1 und die Zuführungsleitung 8 der im wesentlichen aus einem mehrflügeligen Rührwerk bestehenden Attritionsstufe 2 zugeführt und dort unter Zugabe von rückgeführtem Prozesswasser 9 festkörpermechanisch beansprucht und gelangt über die Leitung 11 in den Stapelbehälter 3. Aus diesem wird es über Leitung 12 dem Konditionierer 4 zugeführt, indem es in an sich bekannter Weise unter Zugabe von Flüssigkeit gerührt wird. Danach gelangt das so aufgearbeitete Material in den Flachbodenzyklon 6, aus dem im Überlauf mit Öl angereichertes Material abgezogen und über die Leitung 19 der nachfolgenden Flotation 5 zugeführt wird. In den Unterläufen der Flachbodensyklone werden über 7,17 gereinigte bzw. teilgereinigte Feststoffe abgezogen, während aus der Flotationsstufe 5 das Flotat 21 und die gereinigten Stoffe 20 zur weiteren Behandlung entnommen werden. Das nur teilweise gereinigte Grobkorn wird ebenfalls flotativ weiterbehandelt. Im Falle der Anordnung des Flachbodenzyklons 16 vor dem Konditionierer wird über die Leitung 18 Prozesswasser in der erforderlichen Menge zugeführt. Nach dem Stapelbehälter 3 wird dann die verdünnte Trübe über Leitung 13 dem Zyklon 16 zugeführt und über Leitung 14 in die Zufuhrleitung 12 zum Konditionierer 4 zurückgeführt.

### BEZUGSZEICHENLISTE

- 1: Aufgabebehälter
- 2: Attrition
- 3: Stapelbehälter
- 4: Konditionierer
- 5: Flotation
- 6,16: Flachbodenzyklon
- 7,17: gereinigte Feststoffe
- 8: Zuführungsleitung
- 9,18: Prozeßwasserrückführung
- 10: Materialaufgabe
- 11,12: mechanisch behandeltes Material
- 13,15: Zufuhr zu den Zyklonen
- 14,19: mit Öl angereichertes Material
- 20: gereinigte Feststoffe zur weiteren Behandlung
- 21: Flotat zur weiteren Behandlung

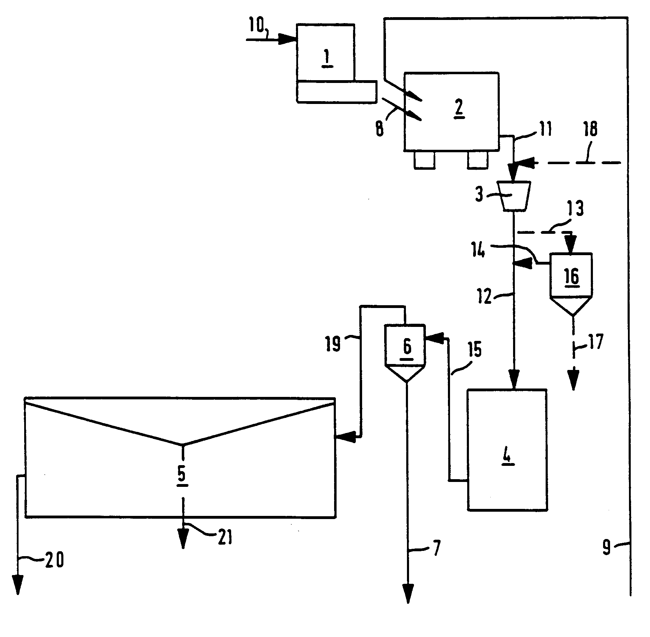

## Patentansprüche

1. Verfahren zur Reinigung körniger Materialien, wie Walzzunder und ölkontaminierte Mineralien von mitgeführten fertigen Substanzen, insbesondere Öl, bei dem die Materialien zur Oberflächenreinigung einer festkörpermechanischen Beanspruchung (Attrition) (2) unterworfen werden und einer Konditionierung (4) unter Flüssigkeitszugabe bzw. mit einer gegebenenfalls oberflächenaktive Reagenzien (Tenside) und Dispergatoren enthaltenden Waschflüssigkeit in einer Flotationsanlage (5) gewaschen werden, **dadurch gekennzeichnet**, daß die Materialien zwischen der Attrition (2) und der Flotation (5), vorzugsweise nach der Konditionierung (4), zur teilweisen Trennung in gereinigtes Material (7, 17) und in eine ölangereicherte Phase (14, 19) in einer ein- oder mehrstufigen Zyklonstufe in Flachbodenzyklonen (6, 16) unter Bildung eines rotierenden Wirbelbettes behandelt werden.

2. Verfahren nach Anspruch 1, **dadurch gekennzeichnet**, daß bei einer Behandlung des Materials im Zyklon (6) vor der Konditionierung (4) das Material auf 50 bis 150 g/l verdünnt wird.

3. Vorrichtung zur Durchführung des Verfahrens nach Anspruch 1 oder 2, **gekennzeichnet durch** die Verwendung eines Flachbodenzyklons (6, 16), der im auslaufenden Konusbereich ein rotierendes Wirbelbett benutzt.

4. Vorrichtung nach Anspruch 4, **dadurch gekennzeichnet**, daß der Flachbodenzyklon mit einem Klassierzyklon kombiniert wird.

## Claims

1. Process for the cleaning of granular materials such as rolling mill scale and oil-contaminated minerals from entrained fatty substances, in particular oil, with said materials for the purpose of surface cleaning being subjected to mechanical stressing with solid bodies (attrition) (2) and a conditioning (4) involving the addition of liquid, and being washed in a flotation plant (5) using a washing liquid containing, if necessary, surface-active reagents (tensides) and dispergents, ***characterized in that*** the materials between the attrition (2) and flotation (5) steps, preferably after conditioning (4), are treated in a one- or multi-stage cyclone stage in flat-bottom cyclones (6, 16) for the partial separation into cleaned material (7, 17) and an oil-enriched phase (14, 19) with a rotating fluidized bed forming during this process.

2. Process according to Claim 1, ***characterized in that*** the material when it is treated by cyclone (6) prior to conditioning (4) is diluted to 50-150 g/l.

3. Apparatus for the implementation of the process according to Claims 1 or 2 ***characterized in that*** a flat-bottom cyclone (6, 16) is employed that utilizes in its tapered discharged section a rotating fluidized bed.

4. Apparatus according to Claim 3 ***characterized in that*** the flat-bottom cyclone is combined with a classifying cyclone.

## Revendications

1. Procédé pour enlever de matériaux granuleux tels que battitures et minéraux contaminés par l'huile, des substances grasses entraînées, en particulier l'huile, selon lequel les matériaux sont soumis à une sollicitation par des solides en vue du nettoyage de surface (attrition) (2) et à un conditionnement (4) avec addition de liquide ou lavés dans une installation de flottation (5) avec un liquide de lavage contenant des tensioactifs (tensides) et des dispersants **caractérisé en ce que** les matériaux sont traités entre l'attrition (2) et la flottation (5), de préférence après le conditionnement (4), pour la séparation partielle en matériau nettoyé (7, 17) et en une phase enrichie d'huile (14, 19) dans une phase de cyclone unique ou multiple dans des cyclones à fond plat (6, 16) avec formation d'un lit fluidisé rotatif.

2. Procédé selon la revendication 1 **caractérisé en ce que** lors d'un traitement du matériau dans le cyclone (6) avant le conditionnement (4) le matériau est dilué à 50 - 150 g/l.

3. Dispositif pour la réalisation du procédé selon la revendication 1 ou 2 **caractérisé** par l'utilisation d'un cyclone à fond plat (6, 16) qui utilise un lit fluidisé rotatif dans la zone conique sortante.

4. Dispositif selon la revendication 4 **caractérisé en ce que** le cyclone à fond plat est combiné à un cyclone de calibrage.
